# EUROPÄISCHE PATENTSCHRIFT

(11) **EP 2 300 748 B1**
(45) Veröffentlichungstag und Bekanntmachung des Hinweises auf die Patenterteilung: **26.10.2016**
(21) Anmeldenummer: 09734784.3
(22) Anmeldetag: 20.04.2009
(51) Int. Cl.: F23N 5/00, F23G 5/50

(54) **VERFAHREN ZUR REGELUNG DER ZUGABE EINES ZUSATZBRENNSTOFFS**
METHOD FOR CONTROLLING THE ADDITION OF AN ADDITIONAL FUEL
PROCÉDÉ DE RÉGULATION DE L'AJOUT D'UN COMBUSTIBLE SUPPLÉMENTAIRE

(30) Priorität: 22.04.2008 EP 08154931
(43) Veröffentlichungstag der Anmeldung: 30.03.2011
(73) Patentinhaber: BASF SE, 67056 Ludwigshafen am Rhein (DE)
(72) Erfinder: GEIGER, Thomas, 67354 Römerberg (DE)
(86) Internationale Anmeldenummer: PCT/EP2009/054653
(87) Internationale Veröffentlichungsnummer: WO 2009/130180

(56) Entgegenhaltungen:
- WO-A1-89/07736
- US-A- 5 123 364
- US-A1- 2002 033 125

## Beschreibung

Die Erfindung betrifft ein Verfahren zur Regelung der Zugabe eines Zusatzbrennstoffes zu einer Verbrennung von mindestens einem brennbaren Stoff in einem Verbrennungsraum. Weiterhin betrifft die Erfindung eine Verwendung des Verfahrens.

Insbesondere bei der Verbrennung von brennbaren Stoffen, die eigenständig nur unzureichend verbrennen, ist es erforderlich, die Verbrennung durch Zugabe eines Zusatzbrennstoffes aufrechtzuerhalten. Übliche Verfahren sind zum Beispiel die thermische Entsorgung fester oder flüssiger Abfallstoffe sowie die thermische Abgasreinigung.

Um eine vollständige Verbrennung zu erzielen, ohne dass bei der Verbrennung weitere Schadstoffe entstehen, ist es erforderlich, die Verbrennung innerhalb vorgegebener Temperaturbereiche durchzuführen. Die Einstellung der Temperatur erfolgt derzeit üblicherweise über die Menge des zugegebenen Zusatzbrennstoffes. So ist zum Beispiel aus dem VDI-Richtlinien VDI 2442, März 2006, Seiten 41 bis 55, bekannt, die Temperatur im Abgas der Verbrennung zu messen und anhand der Temperatur die Zufuhr von Erdgas als Zusatzbrennstoff zu regeln.

Neben der Temperatur ist es üblich, auch den Sauerstoffgehalt des Rauchgases zu messen. Durch die Bestimmung des Sauerstoffgehaltes lässt sich die Menge an benötigter Verbrennungsluft bzw. an einem beliebigen anderen Sauerstoff enthaltenden Gas einstellen. Bei einem zu hohen Sauerstoffgehalt im Rauchgas wird die Menge an Sauerstoff enthaltendem Gas, das der Verbrennung zugeführt wird, reduziert, wenn der Sauerstoffgehalt im Rauchgas einen vorgegebenen Wert unterschreitet, wird die Menge erhöht.

Im Allgemeinen werden Schadstoffe im Rauchgas unterdrückt, solange vorgegebene Regeltemperaturen und Regelsauerstoffwerte eingehalten werden. Hierdurch lassen sich vorgeschriebene Emissionsgrenzwerte einhalten oder unterschreiten. Üblicherweise ist die Regeltemperatur so bemessen, dass der Emissionsgrenzwert der Schadstoffe deutlich unterschritten wird und in der Regel nie erreicht wird. Bei unterschiedlichen Betriebszuständen einer Verbrennungsanlage wird der Sollwert üblicherweise nicht verändert. Dies führt dazu, dass bei normaler Betriebsweise die Regeltemperatur höher ist als tatsächlich erforderlich. Dies führt insbesondere bei eigenständig nur unzureichend verbrennenden Substanzen dazu, dass der Bedarf an Zusatzbrennstoff höher ist als tatsächlich notwendig.

Bei einem Verbrennungsprozess ohne Zugabe eines Zusatzbrennstoffes ist es zum Beispiel aus DE-A 101 53 643 bekannt, im Abgas enthaltene oxidierbare Anteile quantitativ zu erfassen. Gleichzeitig wird auch die Flamme des Brenners überwacht. Hierzu wird die Temperatur erfasst. Beschrieben ist weiterhin, dass bei einer unvollständigen Verbrennung der Brenner abgeschaltet und die Verbrennungsanlage auf Störung gestellt wird.

Aus EP-A 0 697 564 ist es bekannt, im Abgas einer Feuerungsanlage den Anteil an Sauerstoff sowie an Wasserstoff und/oder Kohlenstoff im Abgas gleichzeitig zu erfassen. Anhand des Gehalts an Wasserstoff und/oder Kohlenmonoxid im Abgas wird die Luftzufuhr geregelt. Die unvollständige Verbrennung kann dabei aus einem Luftüberschuss oder Luftmangel resultieren. Bei einem Luftüberschuss sinkt die Verbrennungstemperatur unter einen notwendigen Wert, bei Luftmangel ist der Sauerstoff nicht ausreichend, um eine vollständige Verbrennung durchzuführen.

Ein Verfahren und eine Vorrichtung zur Regelung und Überwachung einer Verbrennung ist ebenfalls aus EP-A 0 697 565 bekannt. Hierbei wird ebenfalls der Anteil an Schadstoffen im Abgas gemessen und anhand des Schadstoffgehaltes die Luftzufuhr zum Brenner der Feuerungsanlage eingestellt. Gemessen wird hierbei der Anteil an Kohlenmonoxid im Abgas. Zur Reduktion des Anteils an Kohlenmonoxid wird die Luftzufuhr erhöht. Geeignete Sensoren, die sich zum Messen des Sauerstoffgehaltes bzw. des Kohlenmonoxidgehaltes in einem Gasstrom eignen, sind zum Beispiel aus US 5,549,871 oder DE-U 202 00 373 bekannt.

Das Dokument US 20020033125 offenbart ein Verfahren und eine Vorrichtung zur Regelung und Überwachung einer Verbrennung.

Aus den bekannten Dokumenten ist jeweils lediglich bekannt, bei unverbrannten Bestandteilen im Rauchgas die Sauerstoffzufuhr zu erhöhen oder zu verringern.

Aufgabe der vorliegenden Erfindung ist es, ein Verfahren zur Regelung der Zugabe eines Zusatzbrennstoffes zu einer Verbrennung bereitzustellen, bei dem die Menge des Zusatzbrennstoffes zum Erzielen einer vollständigen Verbrennung minimiert werden kann.

Gelöst wird die Aufgabe durch ein Verfahren zur Regelung der Zugabe eines Zusatzbrennstoffes zu einer Verbrennung von mindestens einem brennbaren Stoff in einem Verbrennungsraum, das folgende Schritte umfasst:
(a) Vorgabe eines Sollwertes für die Verbrennungstemperatur, wobei der Sollwert so bemessen ist, dass eine vollständige Verbrennung des mindestens einen brennbaren Stoffes erfolgt,
(b) Messen der Verbrennungstemperatur und Erhöhen der Menge des zur Verbrennung zugegebenen Zusatzbrennstoffes, wenn der Sollwert für die Verbrennungstemperatur von der gemessenen Temperatur unterschritten wird und Verringern der Menge des zur Verbrennung zugegebenen Zusatzbrennstoffs, wenn der Sollwert für die Verbrennungstemperatur von der gemessenen Temperatur überschritten wird,
(c) Messen der Konzentration mindestens eines durch unvollständige Verbrennung entstehenden Schadstoffes im Rauchgas und Absenken des Sollwertes für die Verbrennungstemperatur,
(d) Wiederholen der Schritte (b) und (c) bis die gemessene Konzentration des mindestens einen durch unvollständige Verbrennung entstehenden Schadstoffes einen vorgegebenen Grenzwert übersteigt,
(e) Erhöhen des Sollwertes für die Temperatur und Wiederholen der Schritte (b) und (c) bis die gemessene Konzentration des mindestens einen durch unvollständige Verbrennung entstehenden Schadstoffes wieder unterhalb dem vorgegebenen Grenzwert liegt.

Der mindestens eine brennbare Stoff kann fest, flüssig oder gasförmig vorliegen. Üblicherweise wird die Verbrennung bei einer Temperatur von mehr als 700°C unter Sauerstoffüberschuss durchgeführt. Dies bedeutet, dass der Verbrennungsanlage mehr Sauerstoff zugeführt wird, als theoretisch notwendig ist, um eine vollständige Oxidation aller an der Reaktion beteiligten Stoffe zu gewährleisten. Hierdurch verbleibt unverbrauchter Sauerstoff im Rauchgas der Verbrennungsanlage. Die Zugabe des Zusatzbrennstoffes ist insbesondere dann erforderlich, wenn der der Verbrennungsanlage zugeführte feste, flüssige oder gasförmige Stoff einen so niedrigen Heizwert aufweist, dass die erforderliche Verbrennungstemperatur nicht erreicht wird. Um die Verbrennungsreaktion aufrechtzuerhalten ist somit die Zugabe eines Brennstoffes mit einem hohen Heizwert erforderlich.

Der für die Verbrennung notwendige Sauerstoff wird im Allgemeinen in Form von Luft zugegeben. Es ist jedoch auch möglich, jedes beliebige andere, Sauerstoff enthaltende Gas zuzuführen. So kann zum Beispiel auch reiner Sauerstoff oder mit Sauerstoff angereicherte Luft zugeführt werden. Da ein zu hoher Strom an Sauerstoff enthaltendem Gas zu einer Verringerung der Verbrennungstemperatur führt, ist es wünschenswert, die Verbrennung mit einem geringen Sauerstoffüberschuss durchzuführen. Übliche Sollwerte für den Restsauerstoffgehalt im Rauchgas liegen im Allgemeinen zwischen 0 bis 11 Vol.-%. Die Erfassung des Sauerstoffgehalts im Rauchgas kann mit jedem beliebigen, dem Fachmann bekannten Sensor erfolgen. Bevorzugt ist der Einsatz eines Sensors auf Zirkoniumdioxidbasis, da dieser eine schnelle Reaktionszeit aufweist.

In einer bevorzugten Ausführungsform wird bei dem Verfahren gemäß der ersten Alternative zusätzlich auch die Temperatur des Rauchgases oder der Verbrennung erfasst. Um eine vollständige Verbrennung zu erzielen, liegt die Temperatur üblicherweise zwischen 700 und 1000°C. Wenn beispielsweise brennbare Substanzen enthaltende Abgase in der thermischen Abgasreinigung mit einem hohen Sauerstoffgehalt verbrannt werden, liegen die Solltemperaturen üblicherweise im Bereich zwischen 770 und 830°C. Bei kohlenwasserstoffhaltigen Substanzen werden Solltemperaturen üblicherweise von 780°C bis 850°C eingestellt. Solltemperaturen bei der Verbrennung halogenhaltiger Stoffe liegen im Allgemeinen im Bereich von 850 bis 950°C.

Die notwendige Verbrennungstemperatur wird üblicherweise durch die Zugabe des Zusatzbrennstoffes und die Menge des sauerstoffhaltigen Gases, das der Verbrennung zugeführt wird, eingestellt.

Insbesondere bei der Verbrennung von brennbaren Stoffen mit einem niedrigen Heizwert wird die Temperatur der Verbrennung durch Erhöhung oder Verringerung der Menge des zur Verbrennung zugegebenen Zusatzbrennstoffs eingestellt. Durch Erhöhung der Menge des zur Verbrennung zugegebenen Zusatzbrennstoffes wird die Temperatur der Verbrennung erhöht, wohingegen sie durch Verringerung der Menge des zur Verbrennung zugegebenen Zusatzbrennstoffs verringert wird. Der Zusatzbrennstoff weist dabei üblicherweise einen Heizwert auf, der höher ist als der Heizwert des brennbaren Stoffes, der bei der Verbrennung verbrannt wird.

Im Allgemeinen ist der mindestens eine Schadstoff im Rauchgas, der durch unvollständige Verbrennung entsteht, Kohlenmonoxid, mindestens ein Kohlenwasserstoff oder mindestens ein unverbrannter oder unvollständig verbrannter Bestandteil des mindestens einen brennbaren Stoffes und/oder des Zusatzbrennstoffes oder eine Mischung daraus. Insbesondere ist der mindestens eine Schadstoff Kohlenmonoxid oder ein Kohlenwasserstoff.

Neben den genannten Schadstoffen kann aber auch die Konzentration jedes beliebigen anderen Schadstoffes, der im Rauchgas enthalten sein kann, erfasst werden.

Vorteil des erfindungsgemäßen Verfahrens ist, dass die Menge des Zusatzbrennstoffes gegenüber der aus dem Stand der Technik bekannten Temperaturregelung durch die Erfassung des Schadstoffgehaltes im Rauchgas reduziert werden kann. Insbesondere lässt sich eine Reduktion erzielen im Vergleich zu den aus dem Stand der Technik bekannten Verfahren, bei der die Menge des Zusatzbrennstoffes anhand der Verbrennungstemperatur eingestellt wird.

Die Messung der Konzentration des mindestens einen Schadstoffes im Rauchgas kann unmittelbar im Anschluss an den Verbrennungsraum oder nach einem im Rauchgaskanal angeordneten Apparat erfolgen. Auch bei einer Messung unmittelbar im Anschluss an den Verbrennungsraum erfolgt die Messung üblicherweise im Rauchgaskanal. Es ist jedoch auch möglich, die Konzentration des mindestens einen Schadstoffes bereits im Verbrennungsraum direkt nach der Verbrennung zu messen.

Im Rauchgaskanal angeordnete Apparate sind zum Beispiel Apparate zur Kühlung oder Reinigung des Rauchgases. Zur Kühlung des Rauchgases werden im Allgemeinen Wärmetauscher eingesetzt. Ein solcher Wärmetauscher kann zum Beispiel auch zur Dampferzeugung verwendet werden. Der so erzeugte Dampf lässt sich zum Beispiel als Heizdampf für Prozesse unterschiedlichster Art einsetzen. Apparate, die zur Reinigung des Rauchgases eingesetzt werden, sind zum Beispiel Wäscher oder Filter.

Der mindestens eine brennbare Stoff, der mit Hilfe der Zugabe eines Zusatzstoffes verbrannt wird, verbrennt im Allgemeinen nicht selbstgängig. Dies bedeutet, dass die zur Verbrennung erforderliche Temperatur durch Verbrennung des brennbaren Stoffes allein nicht aufrechterhalten werden kann. Ursache hierfür ist zum Beispiel, dass der brennbare Stoff ein Stoffgemisch ist, das neben brennbaren Substanzen auch nichtbrennbare Substanzen enthält. Im Allgemeinen enthält der brennbare Stoff organische Verbindungen, die bei der Verbrennung oxidiert werden. Die nicht-brennbaren Stoffe, die enthalten sind, sind zum Beispiel inerte Gase wie Edelgase oder Stickstoff bei gasförmigen brennbaren Stoffen oder Wasser bei pastösen oder flüssigen brennbaren Stoffen. Auch kann Wasser als Wasserdampf in gasförmigen brennbaren Stoffen enthalten sein.

Im Allgemeinen ist der der Verbrennung zugeführte mindestens eine brennbare Stoff Abfall, brennbare Substanzen enthaltender Schlamm, brennbare Substanzen enthaltendes Abwasser oder brennbare Substanzen enthaltendes Abgas.

Abfälle, die verbrannt werden, sind zum Beispiel Hausmüll, Sondermüll oder Industriemüll sowie Mischungen daraus.

Unter Schlämmen versteht man im Allgemeinen feste Stoffe, die in Wasser dispergiert sind, wobei der Wassergehalt üblicherweise so hoch ist, dass der Schlamm pastös vorliegt.

Brennbare Substanzen enthaltende Flüssigkeiten sind zum Beispiel flüssige Stoffe oder Abwässer aus der chemischen Produktion, von Lackieranlagen, Trocknungsanlagen oder auch aus Druckereien. Die brennbaren Substanzen, die in der Flüssigkeit enthalten sind, können flüssig oder fest sein. Wenn der mindestens eine brennbare Stoff fest ist, so liegt dieser im Allgemeinen in Form von kleinen Partikeln vor, die in der Flüssigkeit dispergiert sind. Flüssige Substanzen sind zum Beispiel Lösungsmittel oder Öle. Diese können in Wasser gemischt sein, können aber auch wasserfrei vorliegen.

Wenn der brennbare Stoff ein brennbare Substanzen enthaltendes Abwasser ist, so ist es bevorzugt, vor der Verbrennung den Wassergehalt zu reduzieren. Hierzu kann jedes beliebige, dem Fachmann bekannte Trocknungs- oder Destillationsverfahren eingesetzt werden. Alternativ ist es zum Beispiel auch möglich, das Wasser durch eine Extraktion zu entfernen. Bei den Trocknungs- bzw. Destillationsverfahren wird das Wasser verdampft und so die mindestens eine brennbare Substanz aufkonzentriert. Hierdurch wird der Gehalt an brennbaren Substanzen und damit der Heizwert erhöht. Vorteil hiervon ist es, dass die Menge an zuzuführendem Zusatzbrennstoff reduziert werden kann.

Wenn der brennbare Stoff gasförmig vorliegt, so handelt es sich im Allgemeinen um ein Abgas. Das Abgas enthält dabei in beliebiger Konzentration mindestens einen brennbaren Stoff. Abgase, die einer Verbrennung unterzogen werden, entstammen zum Beispiel Lackieranlagen, Trocknungsanlagen, beliebigen chemischen Prozessen, Druckereien oder Fermentationen. Neben den brennbaren Stoffen ist im Allgemeinen ein großer Anteil an inerten Gasen im Abgas enthalten, so dass dieses nicht selbstgängig verbrennt. Dies ist insbesondere dann der Fall, wenn der Anteil an brennbaren Substanzen eine für die Verbrennung notwendige Mindestkonzentration unterschreitet. Auch geruchsintensive Stoffe enthaltende Abgase können einer thermischen Abgasreinigung unterzogen werden.

Der der Verbrennung zuzuführende Zusatzbrennstoff weist üblicherweise einen höheren Heizwert auf als der zu verbrennende brennbare Stoff. Geeignete Zusatzbrennstoffe können fest, flüssig oder gasförmig vorliegen. Vorzugsweise ist der Zusatzbrennstoff ausgewählt aus Kohle, Koks und flüssigen oder gasförmigen Kohlenwasserstoffen.

Wenn der Zusatzbrennstoff als Feststoff vorliegt, zum Beispiel als Koks oder Kohle, so wird dieser vorzugsweise vor der Zugabe zur Verbrennung gemahlen.

In einer Ausführungsform der Erfindung wird zusätzlich zur Konzentration des mindestens einen Schadstoffs im Rauchgas auch der Sauerstoffgehalt im Rauchgas bestimmt. Hierdurch lässt sich die Menge an zugeführtem Sauerstoff enthaltendem Gas der Menge an zu verbrennendem brennbaren Stoff und Zusatzbrennstoff anpassen. So kann bei einem zu hohen Sauerstoffgehalt im Rauchgas die Menge an der Verbrennung zugeführtem Sauerstoff enthaltendem Gas reduziert und bei einem zu geringen Sauerstoffgehalt im Rauchgas die Menge an der Verbrennung zugeführtem Sauerstoff enthaltendem Gas erhöht werden. Auf diese Weise kann auch bei einem erhöhten Bedarf an Zusatzbrennstoff sichergestellt werden, dass eine vollständige Verbrennung erfolgt. Wenn die Menge an Sauerstoff enthaltendem Gas nicht der Menge an Zusatzbrennstoff bzw. an brennbarem Stoff angepasst wird, ist es sonst möglich, dass aufgrund von Sauerstoffmangel eine nicht vollständige Verbrennung erfolgt oder dass aufgrund eines zu großen Gasstromes an Sauerstoff enthaltendem Gas die Verbrennung zu stark gekühlt wird und die Verbrennungstemperatur unter den für die vollständige Verbrennung erforderlichen Wert sinkt.

Verwendet wird das erfindungsgemäße Verfahren zur Regelung der Zugabe eines Zusatzbrennstoffes zu einer Verbrennung vorzugsweise in einer Müllverbrennungsanlage oder einer Anlage zur thermischen Abgasreinigung. Als Müllverbrennungsanlagen werden hierbei sowohl Anlagen zur Verbrennung von Hausmüll als auch Anlagen zur Verbrennung von Sondermüll oder Industrieabfällen bezeichnet.

Eine thermische Abgasreinigung findet zum Beispiel Einsatz, wenn zu niedrige Lösemittelmassenströme im Abgas keinen wirtschaftlichen Betrieb einer adsorptiven oder absorptiven Rückgewinnungsanlage ermöglichen, wenn in der Abluft neben organischen Lösemitteln weitere Schadstoffe wie beispielsweise Phenole, Weichmacher, Alterungsschutzmittel oder Farbnebel bzw. Stäube enthalten sind, deren selektive Vorabscheidung hohen Aufwand erfordert und die zu einer irreversiblen Schädigung des zur Rückgewinnung eingesetzten Sorptionsmittels führen. Weiterhin wird eine thermische Abgasbehandlung auch eingesetzt, wenn im Abgas ein Gemisch aus zahlreichen organischen Lösemitteln vorliegt, dessen Zusammensetzung sich während des Adsorptions-/Desorptionsprozesses aufgrund unterschiedlicher Adsorbierbarkeit der einzelnen Komponenten ändern kann und das zur erneuten Einstellung der genauen Rezeptur in seine verschiedenen Bestandteile zerlegt werden muss. Auch wenn die Trennung des Lösemittels vom Desorptionsmittel bzw. Absorptionsmittel nicht möglich oder wirtschaftlich ist, wird eine thermische Abgasreinigung bevorzugt. Ferner wird eine thermische Abgasbehandlung durchgeführt, wenn beim Adsorptions-/Desorptionsvorgang unerwünschte Nebenreaktionen zu korrosiven Produkten führen oder wenn gleichzeitig flüssige Abfälle beseitigt werden sollen und nur eine Anlage zur Entsorgung errichtet werden soll.

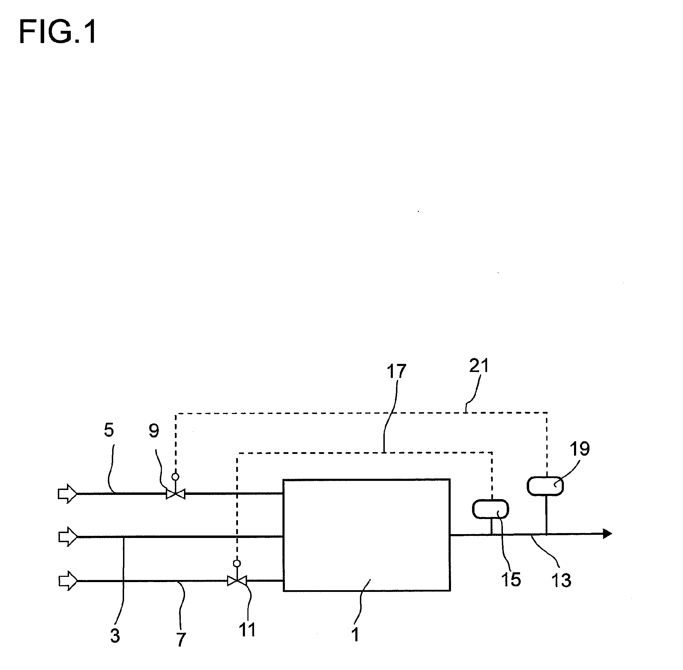

Eine Ausführungsform der Erfindung ist in der Zeichnung dargestellt und wird in der nachfolgenden Beschreibung näher erläutert.

Die einzige Figur zeigt ein Verfahrensschema des erfindungsgemäßen Verfahrens.

Einer Brennkammer 1 wird über eine erste Leitung 3 ein zu verbrennender brennbarer Stoff zugeführt. Der brennbare Stoff kann fest, flüssig oder gasförmig vorliegen. Üblicherweise werden der Brennkammer 1 feste oder flüssige Abfälle oder Abgase zugeführt. Im Allgemeinen ist der Heizwert des über die erste Leitung 3 zugeführten brennbaren Stoffes nicht hoch genug, um eine Verbrennung bei einer für eine vollständige Verbrennung notwendigen Temperatur durchzuführen. Aus diesem Grund wird der Brennkammer 1 über eine zweite Leitung 5 ein Zusatzbrennstoff zugeführt. Als Zusatzbrennstoff eignet sich jeder beliebige, dem Fachmann bekannte Brennstoff, dessen Heizwert höher ist als der Heizwert des über die erste Leitung 3 zugeführten brennbaren Stoffes. Geeignete Zusatzbrennstoffe sind, wie vorstehend bereits erwähnt, zum Beispiel Koks, Kohle und flüssige oder gasförmige Kohlenwasserstoffe.

Der für eine Verbrennung notwendige Sauerstoff wird der Brennkammer 1 über eine dritte Leitung 7 zugeführt. Der Sauerstoff kann dabei als reiner Sauerstoff oder in Form eines Sauerstoff enthaltenden Gases zugeführt werden. Ein üblicherweise eingesetztes Sauerstoff enthaltendes Gas ist zum Beispiel Luft. Weiterhin ist es auch möglich, zum Beispiel mit Sauerstoff angereicherte Luft einzusetzen.

Die Menge des der Brennkammer 1 zugeführten Brennstoffes wird über ein erstes Ventil 9 eingestellt, das in der zweiten Leitung 5 angeordnet ist. Die Menge des der Verbrennung zugeführten sauerstoffhaltigen Gases wird über ein zweites Ventil 11, das in der dritten Leitung 7 angeordnet ist, eingestellt.

Über eine Rauchgasleitung 13 werden die bei der Verbrennung in der Brennkammer 1 entstehenden Rauchgase abgeführt. In der hier dargestellten Ausführungsform wird in der Rauchgasleitung 13 mit einem ersten Sensor 15 der Sauerstoffgehalt in dem bei der Verbrennung entstehenden Rauchgas gemessen. Als erster Sensor 15 eignet sich jeder beliebige, dem Fachmann bekannte Sensor, mit dem der Sauerstoffgehalt bestimmt werden kann.

Über eine Regelleitung 17 ist der erste Sensor 15 mit dem zweiten Ventil 11 verbunden, über das die Menge an sauerstoffhaltigem Gas, das der Brennkammer 1 zugeführt wird, gesteuert wird. In Abhängigkeit vom im Rauchgas gemessenen Sauerstoffgehalt wird über das zweite Ventil 11 die Menge an sauerstoffhaltigem Gas eingestellt, die durch die dritte Leitung 7 der Brennkammer 1 zugeführt wird. Bei einem zu hohen Sauerstoffgehalt im Rauchgas wird die Menge an Sauerstoff enthaltendem Gas reduziert, indem der Durchflussquerschnitt des zweiten Ventils 11 reduziert wird, während bei einem zu niedrigen Sauerstoffgehalt im Rauchgas die Menge an zugeführtem Sauerstoff enthaltendem Gas erhöht wird, indem das zweite Ventil 11 weiter geöffnet wird. Als zweites Ventil 11 eignet sich jedes beliebige, dem Fachmann bekannte, regelbare Ventil. Geeignete Ventile sind zum Beispiel solche mit einem Schieber. Hierbei eignen sich zum Beispiel Ventile mit Plattenschieber, Scheibenabschlussschieber, Keilschieber, Doppelplattenparallelschieber oder Doppelplattenkeilschieber. Weiterhin eignen sich Ventile mit einem Drehschieber oder ein Klappenventil.

Mit einem zweiten Sensor 19 wird der Gehalt an mindestens einem Schadstoff im Rauchgas gemessen. Der vom zweiten Sensor 19 erfasste Schadstoff ist zum Beispiel Kohlenmonoxid, mindestens ein Kohlenwasserstoff oder andere unverbrannte Bestandteile im Rauchgas. Erfindungsgemäß ist der zweite Sensor 19 über eine zweite Regelleitung 21 mit dem ersten Ventil 9 verbunden, über das die Menge an Zusatzbrennstoff eingestellt wird. Das zweite Ventil 9 kann dabei jede beliebige, dem Fachmann bekannte Bauform einnehmen.

Wenn der Gehalt an mit dem zweiten Sensor 19 gemessenen Schadstoffen im Rauchgas zu hoch ist, wird das erste Ventil 9 weiter geöffnet, um die Menge an zugeführtem Zusatzbrennstoff zu erhöhen. Wenn hingegen der Anteil an gemessenen Schadstoffen im Rauchgas einen vorgegebenen unteren Grenzwert unterschreitet, wird das erste Ventil 9 weiter geschlossen, um die Menge an Zusatzbrennstoff zu reduzieren. Auf diese Weise kann die Verbrennung immer mit der erforderlichen Mindestmenge durchgeführt werden. Dies führt zu einer optimalen Ausnutzung und einem gegenüber aus dem Stand der Technik bekannten Regelsystemen reduzierten Verbrauch an Zusatzbrennstoff.

Der obere Grenzwert für die mit dem zweiten Sensor 19 gemessene Konzentration an mindestens einem Schadstoff ist üblicherweise kleiner oder maximal genauso groß wie der erlaubte Grenzwert für diesen Schadstoff. Der untere Grenzwert ist üblicherweise kleiner als der obere Grenzwert und mindestens Null. Wenn der untere Grenzwert zu Null gewählt wird, bedeutet dies, dass eine Konzentration an dem mindestens einen Schadstoff, die mit dem zweiten Sensor 19 gemessen wird, unterhalb der Nachweisgrenze liegt, wenn dieser Sensor keinen Wert anzeigt. Bei einem unteren Grenzwert gleich Null wird üblicherweise die über die zweite Leitung 5 zugegebene Menge an Zusatzbrennstoff reduziert, bis ein Vorkommen von dem mit dem zweiten Sensor 19 gemessenen Schadstoff gemessen wird. Sobald ein Vorkommen gemessen wird, wird die Menge an zugeführtem Zusatzbrennstoff wieder leicht erhöht, so dass die Verbrennung so durchgeführt wird, dass die Menge an Schadstoff unterhalb der Nachweisgrenze liegt.

Neben der hier dargestellten Ausführungsform, bei der der erste Sensor 15 und der zweite Sensor 19 zwei getrennte Bauteile sind, ist es auch möglich, einen kombinierten Sensor einzusetzen, der sowohl den Sauerstoffgehalt als auch den Gehalt an mindestens einem Schadstoff erfassen kann. Weiterhin ist es auch möglich, den ersten Sensor 15 und den zweiten Sensor 19 hinter dem Verbrennungsbereich in der Brennkammer 1 anzuordnen.

In einer Ausführungsform, bei der in der Rauchgasleitung 13 weitere Apparate, beispielsweise Apparate zur Kühlung des Rauchgases oder zur weiteren Reinigung des Rauchgases, enthalten sind, können der erste Sensor 15 und der zweite Sensor 19 auch hinter einem solchen in der Rauchgasleitung 13 angeordneten Apparat positioniert sein.

Zusätzlich zum ersten Sensor 15, mit dem der Sauerstoffgehalt in der Rauchgasleitung 13 gemessen wird und dem zweiten Sensor 19, mit dem die Konzentration an mindestens einem durch unvollständige Verbrennung entstehenden Schadstoff im Rauchgas ermittelt wird, kann auch die Temperatur im Rauchgas oder bei der Verbrennung erfasst werden. Die gewünschte Verbrennungstemperatur lässt sich dann ebenfalls zum Beispiel durch die Menge des zugegebenen Zusatzbrennstoffes einstellen. So führt im Allgemeinen eine größere Menge an Zusatzbrennstoff zu einer höheren Verbrennungstemperatur.

Insbesondere wenn eine bereits bestehende Anlage zur Verbrennung modifiziert werden soll, wobei die bestehende Anlage üblicherweise die Menge an zuzuführendem Zusatzbrennstoff anhand der Verbrennungstemperatur steuert, ist es möglich, mit dem zweiten Sensor 19 den Gehalt an mindestens einem Schadstoff im Rauchgas zu bestimmen. Wenn Schadstoffe im Rauchgas mit dem zweiten Sensor 19 nachgewiesen werden, wird die Solltemperatur, bei der die Verbrennung durchgeführt wird, erhöht. Dies führt dazu, dass die Menge an zuzuführendem Zusatzbrennstoff ebenfalls erhöht wird. Wenn keine Schadstoffe mit dem zweiten Sensor 19 im Rauchgas nachgewiesen werden oder die Menge an Schadstoffen unterhalb dem unteren Grenzwert liegt, wird die Solltemperatur, bei der die Verbrennung durchzuführen ist, reduziert. Dies führt gleichzeitig zu einer Reduktion der Menge an zuzuführendem Zusatzbrennstoff. Auf diese Weise lässt sich die Verbrennung immer bei der niedrigsten geeigneten Temperatur durchführen.

### Beispiele

### Veraleichsbeispiel 1

In einem chemischen Prozess wird ein Produkt durch partielle Oxidation eines Kohlenwasserstoffs mit einer Mischung aus Sauerstoff und Stickstoff hergestellt. Bei der partiellen Oxidation entstehen Nebenprodukte, die zusammen mit dem Stickstoff einer Anlage zur thermischen Abgasreinigung zugeführt werden. Zusätzlich wird bei der Produktion entstehendes Reaktionswasser, das mit organischen Substanzen beladen ist, der Verbrennung zugeführt.

Die Menge an zuzuführendem Zusatzbrennstoff wird durch eine Temperaturregelung eingestellt. Als Zusatzbrennstoff wird Erdgas eingesetzt. Die Temperatur wird so gewählt, dass auch bei schwankendem Anteil an Nebenprodukten und organischen Substanzen in dem der Verbrennung zugeführten Stoffstrom eine vollständige Verbrennung durchgeführt wird. Die Menge an für die Verbrennung benötigtem Erdgas liegt bei 9 m³ pro 1000 m³ Abgas.

### Beispiel 1

Bei der Verbrennung entsprechend dem Vergleichsbeispiel 1 wird die Temperaturregelung durch eine Messung des Kohlenmonoxidgehaltes im Rauchgas und eine Regelung der Menge des Zusatzbrennstoffes anhand des Kohlenmonoxidgehaltes ersetzt. Im Unterschied zur Temperaturregelung gemäß dem Vergleichsbeispiel 1 kann der Erdgasverbrauch auf 7 m³ pro 1000 m³ Abgas gesenkt werden.

### Vergleichsbeispiel 2

Abluft aus einem Trocknungsprozess wird einer Verbrennung mit regenerativer Vorwärmung zugeführt, um in der Abluft enthaltene organische Bestandteile zu oxidieren. Die Menge an benötigtem Zusatzbrennstoff, in diesem Fall Erdgas, wird durch eine Temperaturregelung eingestellt. Der Verbrauch an Erdgas liegt bei 3 m³ pro 1000 m³ Abgas.

### Beispiel 2

Bei dem Verfahren gemäß Vergleichsbeispiel 2 wird die Temperaturregelung durch eine Messung des Kohlenmonoxidgehaltes im Rauchgas und eine Einstellung der Menge des Zusatzbrennstoffes anhand des Kohlenmonoxidgehaltes ersetzt. Hierdurch konnte der Erdgasverbrauch im Vergleich zur Temperaturregelung auf 2,5 m³ pro 1000 m³ Abgas gesenkt werden.

### Bezugszeichenliste

- 1: Brennkammer
- 3: erste Leitung
- 5: zweite Leitung
- 7: dritte Leitung
- 9: erstes Ventil
- 11: zweites Ventil
- 13: Rauchgasleitung
- 15: erster Sensor
- 17: Regelleitung
- 19: zweiter Sensor
- 21: zweite Regelleitung

## Patentansprüche

1. Verfahren zur Regelung der Zugabe eines Zusatzbrennstoffes zu einer Verbrennung von mindestens einem brennbaren Stoff in einem Verbrennungsraum (1), folgende Schritte umfassend:
(a) Vorgabe eines Sollwertes für die Verbrennungstemperatur, wobei der Sollwert so bemessen ist, dass eine vollständige Verbrennung des mindestens einen brennbaren Stoffes erfolgt,
(b) Messen der Verbrennungstemperatur und Erhöhen der Menge des zur Verbrennung zugegebenen Zusatzbrennstoffes, wenn der Sollwert für die Verbrennungstemperatur von der gemessenen Temperatur unterschritten wird und Verringern der Menge des zur Verbrennung zugegebenen Zusatzbrennstoffs, wenn der Sollwert für die Verbrennungstemperatur von der gemessenen Temperatur überschritten wird,
(c) Messen der Konzentration mindestens eines durch unvollständige Verbrennung entstehenden Schadstoffes im Rauchgas und Absenken des Sollwertes für die Verbrennungstemperatur,
(d) Wiederholen der Schritte (b) und (c) bis die gemessene Konzentration des mindestens einen durch unvollständige Verbrennung entstehenden Schadstoffes einen vorgegebenen Grenzwert übersteigt,
(e) Erhöhen des Sollwertes für die Temperatur und Wiederholen der Schritte (b) und (c) bis die gemessene Konzentration des mindestens einen durch unvollständige Verbrennung entstehenden Schadstoffes wieder unterhalb dem vorgegebenen Grenzwert liegt.

2. Verfahren gemäß Anspruch 1, **dadurch gekennzeichnet, dass** der mindestens eine Schadstoff Kohlenmonoxid, mindestens ein Kohlenwasserstoff oder mindestens ein unverbrannter oder unvollständig verbrannter Bestandteil des mindestens einen brennbaren Stoffes und/oder des Zusatzbrennstoffes oder eine Mischung daraus ist.

3. Verfahren gemäß Anspruch 1 oder 2, **dadurch gekennzeichnet, dass** der mindestens eine Schadstoff Kohlenmonoxid ist.

4. Verfahren gemäß einem der Ansprüche 1 bis 3, **dadurch gekennzeichnet, dass** die Konzentration des mindestens einen Schadstoffes im Rauchgas hinter dem Verbrennungsraum oder hinter einem im Rauchgaskanal angeordneten Apparat gemessen wird.

5. Verfahren gemäß Anspruch 4, **dadurch gekennzeichnet, dass** der im Rauchgaskanal angeordnete Apparat zur Kühlung oder Reinigung des Rauchgases verwendet wird.

6. Verfahren gemäß Anspruch 4 oder 5, **dadurch gekennzeichnet, dass** der im Rauchgaskanal angeordnete Apparat zur Dampferzeugung verwendet wird.

7. Verfahren gemäß einem der Ansprüche 1 bis 6, **dadurch gekennzeichnet, dass** der mindestens eine brennbare Stoff nicht selbstgängig verbrennt.

8. Verfahren gemäß Verfahren gemäß einem der Ansprüche 1 bis 7, **dadurch gekennzeichnet, dass** der mindestens eine brennbare Stoff Abfall, brennbare Substanzen enthaltender Schlamm, brennbare Substanzen enthaltende Flüssigkeiten oder brennbare Substanzen enthaltendes Abgas ist.

9. Verfahren gemäß einem der Ansprüche 1 bis 8, **dadurch gekennzeichnet, dass** der Zusatzbrennstoff ausgewählt ist aus Kohle, Koks und flüssigen oder gasförmigen Kohlenwasserstoffen.

10. Verfahren gemäß einem der Ansprüche 1 bis 9, **dadurch gekennzeichnet, dass** zusätzlich im Rauchgas der Sauerstoffgehalt bestimmt wird.

11. Verfahren gemäß Anspruch 10, **dadurch gekennzeichnet, dass** bei einem zu hohen Sauerstoffgehalt im Rauchgas die Menge an der Verbrennung zugeführtem Sauerstoff enthaltendem Gas reduziert und bei einem zu geringen Sauerstoffgehalt im Rauchgas die Menge an der Verbrennung zugeführtem Sauerstoff enthaltendem Gas erhöht wird.

12. Verwendung des Verfahrens gemäß einem der Ansprüche 1 bis 11 in einer Müllverbrennungsanlage oder einer Anlage zur thermischen Abgasreinigung.

## Claims

1. A process for controlling the addition of an auxiliary fuel to combustion of at least one combustible material in a combustion chamber (1), which process comprises the following steps:
(a) setting a preset value for the combustion temperature, wherein the preset value is of a level such that complete combustion of the at least one combustible material proceeds,
(b) measuring the combustion temperature and increasing the rate of the auxiliary fuel added to the combustion if the measured temperature falls below the preset value of the combustion temperature and decreasing the rate of the auxiliary fuel added to the combustion if the preset value of the combustion temperature is exceeded by the measured temperature,
(c) measuring the concentration of at least one pollutant formed in the flue gas by incomplete combustion and lowering the preset value of the combustion temperature,
(d) repeating steps (b) and (c) until the measured concentration of the at least one pollutant formed by incomplete combustion exceeds a predetermined limiting value,
(e) increasing the preset value of the temperature and repeating steps (b) and (c) until the measured concentration of the at least one pollutant formed by incomplete combustion is again below the predetermined limiting value.

2. The process according to claim 1, wherein the at least one pollutant is carbon monoxide, at least one hydrocarbon or at least one unburnt or incompletely burnt component of the at least one combustible material and/or of the auxiliary fuel or a mixture thereof.

3. The process according to claim 1 or 2, wherein the at least one pollutant is carbon monoxide.

4. The process according to any of claims 1 to 3, wherein the concentration of the at least one pollutant in the flue gas is measured downstream of the combustion chamber or downstream of an apparatus arranged in the flue gas channel.

5. The process according to claim 4, wherein the apparatus arranged in the flue gas channel is used for cooling or purifying the flue gas.

6. The process according to claim 4 or 5, wherein the apparatus arranged in the flue gas channel is used for steam generation.

7. The process according to any of claims 1 to 6, wherein the at least one combustible material is not combusted in a self-sustaining manner.

8. The process according to any of claims 1 to 7, wherein the at least one combustible material is waste, sludge comprising combustible substances, liquids comprising combustible substances, or exhaust gas comprising combustible substances.

9. The process according to any of claims 1 to 8, wherein the auxiliary fuel is selected from coal, coke and liquid or gaseous hydrocarbons.

10. The process according to any of claims 1 to 9, wherein the oxygen content is additionally determined in the flue gas.

11. The process according to claim 10, wherein in the case of an excessive oxygen content in the flue gas, the rate of oxygen-comprising gas fed to the combustion is reduced and in the event of an insufficient oxygen content in the flue gas, the rate of oxygen-comprising gas fed to the combustion is increased.

12. The use of the process according to any of claims 1 to 11 in a refuse incineration plant or a plant for thermal exhaust gas purification.

## Revendications

1. Procédé pour la régulation de l'addition d'un combustible d'appoint à une combustion d'au moins une matière combustible dans une chambre de combustion (1), comprenant les étapes suivantes :
(a) prédéfinition d'une valeur prescrite pour la température de combustion, la valeur prescrite étant calculée de façon qu'il en résulte une combustion complète de la ou des matières combustibles,
(b) mesure de la température de combustion et élévation de la quantité du combustible d'appoint ajouté à la combustion, quand la température mesurée passe en-dessous de la valeur prescrite pour la température de combustion, et diminution de la quantité du combustible d'appoint ajouté à la combustion quand la température mesurée passe au-dessus de la valeur prescrite pour la température de combustion,
(c) mesure de la concentration, dans les fumées, d'au moins un polluant résultant d'une combustion incomplète, et abaissement de la valeur prescrite pour la température de combustion,
(d) répétition des étapes (b) et (c) jusqu'à ce que la concentration mesurée de l'au moins un polluant résultant d'une combustion incomplète dépasse une valeur limite prédéfinie,
(e) augmentation de la valeur prescrite pour la température, et répétition des étapes (b) et (c) jusqu'à ce que la concentration mesurée de l'au moins un polluant résultant d'une combustion incomplète revienne en-dessous de la valeur limite prédéfinie.

2. Procédé selon la revendication 1, **caractérisé en ce que** l'au moins un polluant est le monoxyde de carbone, au moins un hydrocarbure, ou au moins un constituant imbrûlé ou incomplètement brûlé de la ou des matières combustibles et/ou du combustible d'appoint, ou un mélange de ceux-ci.

3. Procédé selon la revendication 1 ou 2, **caractérisé en ce que** l'au moins un polluant est le monoxyde de carbone.

4. Procédé selon l'une des revendications 1 à 3, **caractérisé en ce que** la concentration de l'au moins un polluant dans les fumées est mesurée en arrière de la chambre de combustion ou en arrière d'un appareil disposé dans la gaine des fumées.

5. Procédé selon la revendication 4, **caractérisé en ce que** l'appareil disposé dans la gaine des fumées est utilisé pour refroidir ou purifier les fumées.

6. Procédé selon la revendication 4 ou 5, **caractérisé en ce que** l'appareil disposé dans la gaine des fumées est utilisé pour la production de vapeur.

7. Procédé selon l'une des revendications 1 à 6, **caractérisé en ce que** l'au moins une matière combustible ne brûle pas sans apport supplémentaire de combustible.

8. Procédé selon l'une des revendications 1 à 7, **caractérisé en ce que** l'au moins une matière combustible est un déchet, une boue contenant des substances combustibles, des liquides contenant des substances combustibles ou un effluent gazeux contenant des substances combustibles.

9. Procédé selon l'une des revendications 1 à 8, **caractérisé en ce que** le combustible d'appoint est choisi parmi le charbon, le coke et les hydrocarbures liquides ou gazeux.

10. Procédé selon l'une des revendications 1 à 9, **caractérisé en ce qu'**on détermine en outre la teneur des fumées en oxygène.

11. Procédé selon la revendication 10, **caractérisé en ce que**, en présence d'une teneur des fumées trop élevée en oxygène, on réduit la quantité de gaz contenu dans l'oxygène amené à la combustion et, en présence d'une teneur des fumées trop faible en oxygène, on augmente la quantité du gaz contenant de l'oxygène amené à la combustion.

12. Utilisation du procédé selon l'une des revendications 1 à 11 dans une installation d'incinération d'ordures ou dans une installation de purification thermique des effluents gazeux.
